# FASCICULE DE BREVET EUROPEEN

(11) **EP 4 170 222 B1**
(45) Date de publication et mention de la délivrance du brevet: **15.05.2024**
(21) Numéro de dépôt: 22200206.5
(22) Date de dépôt: 07.10.2022
(51) Int. Cl.: F17C 3/00

(54) **RÉSERVOIR CRYOGÉNIQUE DE STOCKAGE DE GAZ LIQUÉFIÉ**
KRYOGENER SPEICHERBEHÄLTER FÜR VERFLÜSSIGTES GAS
CRYOGENIC TANK FOR STORING LIQUEFIED GAS

(30) Priorité: 20.10.2021 FR 2111123
(43) Date de publication de la demande: 26.04.2023
(73) Titulaire: Cryolor Société Anonyme, 57640 Argancy (FR)
(72) Inventeur: VARRASSI, Lucien, 57640 ARGANCY (FR); GIBAUX, Etienne, 57640 ARGANCY (FR)
(74) Mandataire: Air Liquide

(56) Documents cités:
- DD-A1- 261 635
- RU-C1- 2 709 750
- US-A- 2 858 136
- US-A- 3 037 657
- US-A- 4 343 413
- US-A- 4 496 073
- US-B2- 10 928 007

## Description

L'invention concerne un réservoir cryogénique de stockage de fluide liquéfié. Un tel réservoir est connu de US3037657A.

L'invention concerne plus particulièrement un réservoir cryogénique de stockage de fluide liquéfié comprenant une enveloppe interne délimitant un volume de stockage pour du fluide liquéfié et une enveloppe externe disposée de façon espacée autour de l'enveloppe interne, l'espace entre lesdites enveloppes interne et externe comprenant une isolation thermique, les enveloppes interne et externe s'étendant selon une direction longitudinale entre deux extrémités longitudinales, le réservoir comprenant une structure de maintien de l'enveloppe interne dans l'enveloppe externe, la structure de maintien étant composée d'une première liaison mécanique entre une première extrémité longitudinale de l'enveloppe interne et une première extrémité longitudinale de l'enveloppe externe, et d'une seconde liaison mécanique entre la seconde extrémité longitudinale de l'enveloppe interne et la seconde extrémité longitudinale de l'enveloppe externe, la première liaison mécanique comprenant une première paroi support de forme générale en tronc de cône dont l'extrémité de plus grand diamètre est reliée rigidement à l'enveloppe externe et l'extrémité de plus petit diamètre est reliée à l'enveloppe interne.

L'invention concerne par exemple les réservoirs fixes ou mobiles, notamment les semi-remorques cryogéniques de transport des gaz de l'air liquéfié (hélium ou hydrogène par exemple), du gaz naturel liquéfié ou tout autre fluide ou mélange...

La fabrication de réservoirs cryogéniques à double enveloppe requiert un grand soin dans l'assemblage des enveloppes et en particulier pour le maintien de l'enveloppe interne dans l'enveloppe externe. La structure doit limiter les entrées thermiques vers l'intérieur tout en s'adaptant à des dilatations/rétractations relatives des pièces lors des passages entre les configurations chaude (réservoir à température ambiante) et froide (réservoir interne à température cryogénique, par exemple inférieure à -150°C). De plus, la structure doit être capable de tenir et reprendre les efforts. Les solutions connues ne permettent pas de répondre à toutes ces exigences de façon optimale.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que la seconde liaison mécanique comprend une seconde paroi support de forme générale en tronc de cône dont l'extrémité de plus grand diamètre est reliée rigidement à l'enveloppe externe et l'extrémité de plus petit diamètre est reliée à l'enveloppe interne.

Par ailleurs, des modes de réalisation de l'invention peuvent comporter l'une ou plusieurs des caractéristiques suivantes :
- la structure de maintien de l'enveloppe interne dans l'enveloppe externe est constituée par la première paroi support et de la seconde paroi support,
- la première paroi support est inclinée selon un angle compris entre zéro degrés et 30 degrés et de préférence 5 degrés par rapport à la direction longitudinale,
- la seconde paroi support est inclinée selon un angle compris entre 60 degrés et 89 degrés et de préférence 85 degrés par rapport à la direction longitudinale,
- la première paroi support est orientée de sorte que le tronc de cône converge en direction de la seconde extrémité longitudinale,
- la seconde paroi support est orientée de sorte que le tronc de cône converge en direction de la seconde extrémité longitudinale,
- la seconde paroi support constitue une liaison mécanique entre les deux enveloppes qui est plus déformable que la première paroi support, c'est-à-dire que la seconde paroi support est configurée pour permettre, lors d'un différentiel de température entre les deux enveloppes générant une rétraction ou une dilatation relative des enveloppes, un déplacement longitudinal relatif entre les deux enveloppes au niveau de la seconde extrémité, ce déplacement relatif étant supérieur au déplacement longitudinal relatif autorisé par la déformation de la première paroi support entre les deux enveloppes au niveau de la première extrémité,
- les enveloppes interne et externe comportent chacune une portion cylindrique à section circulaire s'étendant selon la direction longitudinale et dont les deux extrémités sont refermées par des parois en dômes, les extrémités des parois support étant reliées rigidement aux portions cylindriques,
- les parois support ont une épaisseur comprise entre 1 et 5mm et de préférence comprise entre 1 et 3mm,
- en configuration d'utilisation du réservoir, la direction longitudinale est horizontale.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

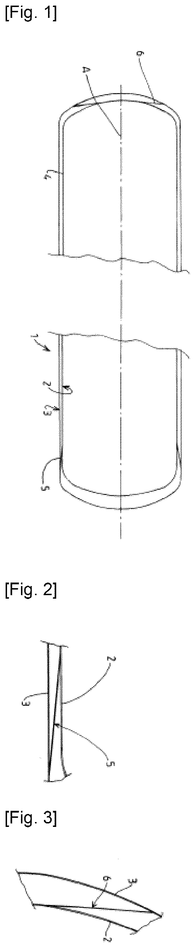

[Fig. 1] représente une vue en coupe verticale et longitudinale, schématique et partielle, illustrant un exemple de réalisation possible de l'invention,
[Fig. 2] représente une vue en coupe d'un détail B d'une première extrémité du réservoir de l'exemple de réalisation de la [Fig. 1],
[Fig. 3] représente une vue en coupe d'un détail A d'une seconde extrémité du réservoir de l'exemple de réalisation de la [Fig. 1],

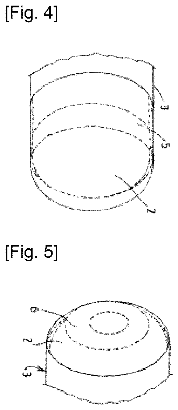

[Fig. 4] représente une vue en perspective, schématique et en transparence, de la première extrémité du réservoir de l'exemple de réalisation de la [Fig. 1],
[Fig. 5] représente une vue en perspective schématique et en transparence de la seconde extrémité du réservoir de l'exemple de réalisation de la [Fig. 1].

Le réservoir 1 cryogénique de stockage de fluide liquéfié illustré à titre d'exemple comprend une enveloppe interne 2 délimitant un volume de stockage pour du fluide liquéfié et une enveloppe externe 3 disposée de façon espacée autour de l'enveloppe 2 interne.

L'espace entre les enveloppes interne 2 et externe 3 comprend une isolation 4 thermique, par exemple un isolant thermique du type multicouches (« MLI »). Cet espace est de préférence maintenu sous vide.

Les enveloppes interne 2 et externe 3 s'étendent selon une direction A longitudinale entre deux extrémités longitudinales.

En configuration d'utilisation du réservoir 1 cette direction longitudinale A est de préférence horizontale (réservoir horizontal).

Le réservoir 1 est de préférence de type cylindrique (portion cylindrique refermée à chaque extrémité par une paroi courbe en forme de dôme).

Le réservoir 1 comprend une structure de maintien (ou supportage) de l'enveloppe interne 2 dans l'enveloppe 3 externe. Cette structure de maintien est composée (et de préférence constituée) de deux liaisons situées respectivement aux deux extrémité longitudinales. La structure de maintien comprend une première liaison 5 mécanique entre une première extrémité longitudinale de l'enveloppe interne 2 et une première extrémité longitudinale de l'enveloppe 3 externe, et une seconde liaison 6 mécanique entre la seconde extrémité longitudinale de l'enveloppe interne 2 et la seconde extrémité longitudinale de l'enveloppe 3 externe.

La première liaison mécanique comprend une première paroi 5 support de forme générale en tronc de cône dont l'extrémité de plus grand diamètre est reliée rigidement à l'enveloppe 3 externe et l'extrémité de plus petit diamètre est reliée à l'enveloppe 2 interne.

La première paroi 5 support est de préférence inclinée selon un angle compris entre zéro degrés (de préférence supérieur à zéro) et 30 degrés, et de préférence cinq degrés par rapport à la direction A longitudinale.

La seconde liaison mécanique comprend une seconde paroi 6 support de forme générale en tronc de cône dont l'extrémité de plus grand diamètre est reliée rigidement à l'enveloppe 3 externe et l'extrémité de plus petit diamètre est reliée à l'enveloppe 2 interne.

La seconde paroi 6 support est de préférence inclinée selon un angle compris entre 60 degrés et 89 degrés et de préférence 85 degrés par rapport à la direction longitudinale.

Comme illustré, la première paroi 5 support est orientée de préférence de sorte que le tronc de cône converge en direction de la seconde extrémité longitudinale (vers la gauche sur la représentation schématique).

La seconde paroi 6 support est orientée de préférence de sorte que le tronc de cône converge en direction de la seconde extrémité longitudinale.

De préférence, la seconde paroi 6 support constitue une liaison entre les deux enveloppes 2, 3 qui est plus déformable (liaison relativement plus flexible) que la première paroi 5 support (liaison relativement plus rigide). C'est-à-dire que la seconde paroi 6 support est configurée pour permettre, lors d'un différentiel de température entre les deux enveloppes 2, 3 générant une rétraction ou une dilatation relative des enveloppes 2, 3, un déplacement longitudinal relatif entre les deux enveloppes 2, 3 au niveau de la seconde extrémité qui est supérieur au déplacement longitudinal relatif autorisé par la première paroi 5 support au niveau de la première extrémité.

Ces degrés de flexibilité ou rigidité relatifs peuvent être choisis en adaptant les orientations (inclinaisons) relatives des parois 5, 6 et/ou leur dimension (notamment épaisseur) et/ou leurs matériaux.

Ainsi, l'enveloppe 2 interne peut être supportée dans l'enveloppe 3 externe par deux parois coniques 5, 6 dont l'une est relativement plus déformable et configurée notamment pour se déformer lors de la contraction relative de l'enveloppe 2 interne mise en froid. Cette déformation est configurée pour permettre d'absorber les variations de dimensions relatives des deux enveloppes 2, 3 sans nuire au maintien de l'enveloppe interne dans l'enveloppe 3 externe et sans affecter l'isolation thermique.

En particulier, cette architecture permet une déformation de la seconde paroi 6 support qui est proche de la contraction longitudinale relative de l'enveloppe 2 interne (et qui permet cette contraction de l'enveloppe 2 interne).

La seconde paroi 6 support peut être constituée, par exemple, d'acier, par exemple un acier inoxydable du type 304 ou 316.

Lors du remplissage de l'enveloppe 2 interne avec du liquide cryogénique, le gradient thermique (de la température ambiante extérieure à la température du liquide cryogénique à l'intérieur : par exemple entre -269°C et -180°C) que subira cette seconde paroi 6 permettra d'accompagner la contraction thermique de l'enveloppe 2 interne au niveau de la seconde extrémité alors que la première extrémité (au niveau de la première liaison 5, considérée comme un point fixe), subira une déformation nulle ou plus faible. Lors de sa contraction, l'enveloppe interne 2 (au moins une extrémité reliée à l'enveloppe 2 interne) va se déplacer longitudinalement relativement vers la première extrémité (relativement fixe).

A noter que le terme « flexible » utilisé ci-dessus ne signifie pas forcément que la seconde paroi 6 est « flexible » intrinsèquement. En effet, la géométrie conique est par nature relativement rigide en comparaison d'une tôle plane En revanche, cette seconde paroi 6 support est configurée pour se déformer (déplacement longitudinal) en réponse aux changements de température tout en permettant la tenue aux efforts radiaux. En particulier, la seconde 6 paroi support est ainsi apte et configurée pour maintenir une rigidité suffisante dans les directions radiales (transversales) pour la reprise des efforts.

Cette première liaison 5 est donc un point fixe vis à vis de la thermique. Cette première liaison est de préférence configurée pour :
- transmettre les efforts radiaux (vertical et latéral) (par exemple entre les deux enveloppes 2, 3)
- transmettre les efforts longitudinaux (accélération de 2g par exemple) (par exemple entre les deux enveloppes 2, 3).

Lors de sa déformation, la seconde paroi 6 peut par exemple s'incliner de façon à se rapprocher un peu plus de la direction longitudinale A.

Au moins la première paroi 5 support peut être formée en une ou plusieurs parties assemblées, par exemple deux demi cônes rigides soudés (par exemple en acier inoxydable tel que du type 304 ou 316). La structure en deux demi cônes peut notamment permettre de centrer l'enveloppe 2 interne dans l'enveloppe extérieure 3 lors du montage.

Comme illustré, la liaison entre la première paroi 5 support et l'enveloppe 3 externe peut être fixée (soudée) très proche du fond (extrémité) de l'enveloppe 3 externe, de préférence aux niveau des parties cylindriques des enveloppes 2, 3, par exemple à proximité de tuyauteries inter-parois (non représentées par soucis de simplification).

Idem, la seconde paroi 6 support peut être fixée (soudée) très proche du fond (extrémité) de l'enveloppe 2 interne.

A noter la structure de maintien de l'enveloppe interne 2 dans l'enveloppe 3 externe est de préférence constituée par les première paroi 5 support et seconde paroi 6 support. C'est-à-dire que, de préférence, il n'y a pas d'autre structure de supportage de l'enveloppe interne 2. Cependant une ou d'autres liaisons additionnelles (tirant(s) par exemple) peuvent être envisagées.

De plus, le réservoir peut comporter des éléments de liaison entre les enveloppes 2, 3, notamment pour le passage ou guidage de tuyauteries entre les enveloppes 2, 3 (mais ces éléments n'assurent pas forcément une fonction de supportage comparable à celle des deux parois 5, 6).

A noter que la forme de la ou les parois supports est désignée comme de « forme générale en tronc de cône ». Ceci signifie que la paroi considérée peut effectivement être en tronc de cône. Cependant tout autre forme approchante peut être envisagée, notamment une forme bombée d'approchant d'un cône.

## Revendications

1. Réservoir cryogénique de stockage de fluide liquéfié comprenant une enveloppe interne (2) délimitant un volume de stockage pour du fluide liquéfié et une enveloppe externe (3) disposée de façon espacée autour de l'enveloppe (2) interne, l'espace entre lesdites enveloppes interne (2) et externe (3) comprenant une isolation (4) thermique, les enveloppes interne (2) et externe (3) s'étendant selon une direction (A) longitudinale entre deux extrémités longitudinales, le réservoir (1) comprenant une structure de maintien de l'enveloppe interne (2) dans l'enveloppe (3) externe, la structure de maintien étant composée d'une première liaison (5) mécanique entre une première extrémité longitudinale de l'enveloppe interne (2) et une première extrémité longitudinale de l'enveloppe (3) externe, et d'une seconde liaison (6) mécanique entre la seconde extrémité longitudinale de l'enveloppe interne (2) et la seconde extrémité longitudinale de l'enveloppe (3) externe, la première liaison mécanique comprenant une première paroi (5) support de forme générale en tronc de cône dont l'extrémité de plus grand diamètre est reliée rigidement à l'enveloppe (3) externe et l'extrémité de plus petit diamètre est reliée à l'enveloppe (2) interne, **caractérisé en ce que** la seconde liaison mécanique comprend une seconde paroi (6) support de forme générale en tronc de cône dont l'extrémité de plus grand diamètre est reliée rigidement à l'enveloppe (3) externe et l'extrémité de plus petit diamètre est reliée à l'enveloppe (2) interne.

2. Réservoir selon la revendication 1 **caractérisé en ce que** la structure de maintien de l'enveloppe interne (2) dans l'enveloppe (3) externe est constituée par la première paroi (5) support et de la seconde paroi (6) support.

3. Réservoir selon la revendication 1 ou 2, **caractérisé en ce que** la première paroi (5) support est inclinée selon un angle compris entre zéro degrés et 30 degrés et de préférence 5 degrés par rapport à la direction longitudinale.

4. Réservoir selon l'une quelconque des revendications 1 à 3, **caractérisé en ce que** la seconde paroi (6) support est inclinée selon un angle compris entre 60 degrés et 89 degrés et de préférence 85 degrés par rapport à la direction longitudinale.

5. Réservoir selon l'une quelconque des revendications 1 à 4, **caractérisé en ce que** la première paroi (5) support est orientée de sorte que le tronc de cône converge en direction de la seconde extrémité longitudinale.

6. Réservoir selon l'une quelconque des revendications 1 à 5, **caractérisé en ce que** la seconde paroi (6) support est orientée de sorte que le tronc de cône converge en direction de la seconde extrémité longitudinale.

7. Réservoir selon l'une quelconque des revendications 1 à 6, **caractérisé en ce que** la seconde paroi (6) support constitue une liaison mécanique entre les deux enveloppes (2, 3) qui est plus déformable que la première paroi (5) support, c'est-à-dire que la seconde paroi (6) support est configurée pour permettre, lors d'un différentiel de température entre les deux enveloppes (2, 3) générant une rétraction ou une dilatation relative des enveloppes (2, 3), un déplacement longitudinal relatif entre les deux enveloppes (2, 3) au niveau de la seconde extrémité, ce déplacement relatif étant supérieur au déplacement longitudinal relatif autorisé par la déformation de la première paroi (5) support entre les deux enveloppes (2, 3) au niveau de la première extrémité.

8. Réservoir selon l'une quelconque des revendications 1 à 6, **caractérisé en ce que** les enveloppes interne (2) et externe (3) comportent chacune une portion cylindrique à section circulaire s'étendant selon la direction (A) longitudinale et dont les deux extrémités sont refermées par des parois en dômes, les extrémités des parois (5, 6) support étant reliées rigidement aux portions cylindriques.

9. Réservoir selon l'une quelconque des revendications 1 à 8, **caractérisé en ce que** les parois (5, 6) support ont une épaisseur comprise entre 1 et 5mm et de préférence comprise entre 1 et 3mm.

10. Réservoir selon l'une quelconque des revendications 1 à 9, **caractérisé en ce que**, en configuration d'utilisation du réservoir (1), la direction longitudinale (A) est horizontale.

## Patentansprüche

1. Kryogener Behälter zum Speichern eines verflüssigten Fluids, der eine innere Hülle (2), die ein Speichervolumen für ein verflüssigtes Fluid begrenzt, und eine äußere Hülle (3) enthält, die in Abstand um die innere Hülle (2) herum angeordnet ist, wobei der Raum zwischen der inneren (2) und der äußeren Hülle (3) einen Wärmeschutz (4) enthält, wobei die innere (2) und äußere Hülle (3) sich gemäß einer Längsrichtung (A) zwischen zwei Längsenden erstrecken, wobei der Behälter (1) eine Haltestruktur der inneren Hülle (2) in der äußeren Hülle (3) enthält, wobei die Haltestruktur aus einer ersten mechanischen Verbindung (5) zwischen einem ersten Längsende der inneren Hülle (2) und einem ersten Längsende der äußeren Hülle (3) und einer zweiten mechanischen Verbindung (6) zwischen dem zweiten Längsende der inneren Hülle (2) und dem zweiten Längsende der äußeren Hülle (3) besteht, wobei die erste mechanische Verbindung eine erste Stützwand (5) von allgemeiner Kegelstumpfform enthält, deren Ende größeren Durchmessers starr mit der äußeren Hülle (3) und das Ende kleineren Durchmessers mit der inneren Hülle (2) verbunden ist, **dadurch gekennzeichnet, dass** die zweite mechanische Verbindung eine zweite Stützwand (6) von allgemeiner Kegelstupfform enthält, deren Ende größeren Durchmessers starr mit der äußeren Hülle (3) und das Ende kleineren Durchmessers mit der inneren Hülle (2) verbunden ist.

2. Behälter nach Anspruch 1, **dadurch gekennzeichnet, dass** die Haltestruktur der inneren Hülle (2) in der äußeren Hülle (3) aus der ersten Stützwand (5) und der zweiten Stützwand (6) besteht.

3. Behälter nach Anspruch 1 oder 2, **dadurch gekennzeichnet, dass** die erste Stützwand (5) gemäß einem Winkel zwischen null Grad und 30 Grad und vorzugsweise 5 Grad bezüglich der Längsrichtung geneigt ist.

4. Behälter nach einem der Ansprüche 1 bis 3, **dadurch gekennzeichnet, dass** die zweite Stützwand (6) gemäß einem Winkel zwischen 60 Grad und 89 Grad und vorzugsweise 85 Grad bezüglich der Längsrichtung geneigt ist.

5. Behälter nach einem der Ansprüche 1 bis 4, **dadurch gekennzeichnet, dass** die erste Stützwand (5) so ausgerichtet ist, dass der Kegelstumpf in Richtung des zweiten Längsendes konvergiert.

6. Behälter nach einem der Ansprüche 1 bis 5, **dadurch gekennzeichnet, dass** die zweite Stützwand (6) so ausgerichtet ist, dass der Kegelstumpf in Richtung des zweiten Längsendes konvergiert.

7. Behälter nach einem der Ansprüche 1 bis 6, **dadurch gekennzeichnet, dass** die zweite Stützwand (6) eine mechanische Verbindung zwischen den zwei Hüllen (2, 3) bildet, die verformbarer ist als die erste Stützwand (5), d.h., dass die zweite Stützwand (6) konfiguriert ist, um bei einer Temperaturdifferenz zwischen den zwei Hüllen (2, 3), die ein relatives Schrumpfen oder Ausdehnen der Hüllen (2, 3) erzeugt, eine relative Längsverschiebung zwischen den zwei Hüllen (2, 3) im Bereich des zweiten Endes zu ermöglichen, wobei diese relative Verschiebung größer ist als die relative Längsverschiebung, die durch die Verformung der ersten Stützwand (5) zwischen den zwei Hüllen (2, 3) im Bereich des ersten Endes zugelassen wird.

8. Behälter nach einem der Ansprüche 1 bis 6, **dadurch gekennzeichnet, dass** die innere (2) und die äußere Hülle (3) je einen zylindrischen Abschnitt mit Kreisquerschnitt aufweisen, der sich gemäß der Längsrichtung (A) erstreckt und dessen zwei Enden von kuppelförmigen Wänden verschlossen werden, wobei die Enden der Stützwände (5, 6) starr mit den zylindrischen Abschnitten verbunden sind.

9. Behälter nach einem der Ansprüche 1 bis 8, **dadurch gekennzeichnet, dass** die Stützwände (5, 6) eine Dicke zwischen 1 und 5 mm und vorzugsweise zwischen 1 und 3 mm haben.

10. Behälter nach einem der Ansprüche 1 bis 9, **dadurch gekennzeichnet, dass** die Längsrichtung (A) in Benutzungskonfiguration des Behälters (1) waagrecht ist.

## Claims

1. Cryogenic tank for storing liquefied fluid, comprising an inner shell (2) delimiting a storage volume for liquefied fluid and an outer shell (3) arranged in a spaced manner around the inner shell (2), the space between said inner (2) and outer (3) shells comprising a thermal insulation (4), the inner (2) and outer (3) shells extending in a longitudinal direction (A) between two longitudinal ends, the tank (1) comprising a structure for holding the inner shell (2) in the outer shell (3), the holding structure being composed of a first mechanical connection (5) between a first longitudinal end of the inner shell (2) and a first longitudinal end of the outer shell (3), and of a second mechanical connection (6) between the second longitudinal end of the inner shell (2) and the second longitudinal end of the outer shell (3), the first mechanical connection comprising a first support wall (5) of general truncated cone shape whose larger-diameter end is rigidly connected to the outer shell (3) and whose smaller-diameter end is connected to the inner shell (2), **characterized in that** the second mechanical connection comprises a second support wall (6) of general truncated cone shape whose larger-diameter end is rigidly connected to the outer shell (3) and whose smaller-diameter end is connected to the inner shell (2).

2. Tank according to Claim 1, **characterized in that** the structure for holding the inner shell (2) in the outer shell (3) is formed by the first support wall (5) and by the second support wall (6).

3. Tank according to Claim 1 or 2, **characterized in that** the first support wall (5) is inclined by an angle of between zero degrees and 30 degrees and preferably 5 degrees with respect to the longitudinal direction.

4. Tank according to any one of Claims 1 to 3, **characterized in that** the second support wall (6) is inclined by an angle of between 60 degrees and 89 degrees and preferably 85 degrees with respect to the longitudinal direction.

5. Tank according to any one of Claims 1 to 4, **characterized in that** the first support wall (5) is oriented in such a way that the truncated cone converges in the direction of the second longitudinal end.

6. Tank according to any one of Claims 1 to 5, **characterized in that** the second support wall (6) is oriented in such a way that the truncated cone converges in the direction of the second longitudinal end.

7. Tank according to any one of Claims 1 to 6, **characterized in that** the second support wall (6) constitutes a mechanical connection between the two shells (2, 3) that is more deformable than the first support wall (5), that is to say that the second support wall (6) is configured so that, during a temperature differential between the two shells (2, 3) generating a relative retraction or expansion of the shells (2, 3), it allows a relative longitudinal movement between the two shells (2, 3) at the second end, this relative movement being greater than the relative longitudinal movement allowed by the deformation of the first support wall (5) between the two shells (2, 3) at the first end.

8. Tank according to any one of Claims 1 to 6, **characterized in that** the inner (2) and outer (3) shells each comprise a cylindrical portion of circular cross section extending in the longitudinal direction (A) and whose two ends are closed by walls in the form of domes, the ends of the support walls (5, 6) being rigidly connected to the cylindrical portions.

9. Tank according to any one of Claims 1 to 8, **characterized in that** the support walls (5, 6) have a thickness of between 1 and 5 mm and preferably between 1 and 3 mm.

10. Tank according to any one of Claims 1 to 9, **characterized in that**, in the use configuration of the tank (1), the longitudinal direction (A) is horizontal.
